# DEMANDE DE BREVET EUROPEEN

(11) **EP 1 859 969 A1**
(43) Date de publication de la demande: **28.11.2007**
(21) Numéro de dépôt: 07370011.4
(22) Date de dépôt: 22.05.2007
(51) Int. Cl.: B60C 27/16, B60C 27/12

(54) **Ceinture élastique anti-neige et verglas à crampons pour pneumatique d'automobile à montage facile et rapide**

(30) Priorité: 23.05.2006 FR 0604607
(71) Demandeur: Bonpain, Bernard, 59551 Attiches (FR)
(72) Inventeur: Bonpain, Bernard, 59551 Attiches (FR)

(57) **Abrégé**

L'invention concerne un dispositif anti-neige et verglas pour automobile, constitué d'une bande élastique (1) pourvue de crampons (8) à installer sur les roues motrices pour améliorer l'adhérence sur routes enneigées ou verglacées, notamment en montagne. La ceinture élastique (1) pourvue de crampons (8) est placée facilement par étirement autour de la bande de roulement d'un pneumatique, elle est maintenue en place par auto-serrage et empêché de déplacement latéral par un élément allongé (4) placé du côté extérieur de la roue ainsi qu'un élastique de type extenseur placé facilement par extension contre le flanc intérieur du pneumatique, Ils sont reliés à la bande élastique par des sangles en polypropylène.

## Description

La présente invention est un dispositif antidérapant pour véhicules automobiles à installer sur les roues motrices pour améliorer l'adhérence sur routes enneigées ou verglacées, notamment en montagne, permettant entre autre de rejoindre les stations de sports d'hiver.

Traditionnellement, le matériel utilisé à cette fin est constitué de chaînes anti-neige dont l'installation est souvent laborieuse pour de nombreux utilisateurs, entraînant des désagréments, outre les difficultés lors de la pose, le matériel mal installé finit souvent par se détacher en roulant... Le dispositif selon l'invention permet de remédier à ces inconvénients, conçu afin d'obtenir un dispositif antidérapant d'une très grande facilité et rapidité de montage tout en étant efficace.

Les dessins annexés illustrent l'invention :
- la figure 1 représente une vue du côté extérieur de la roue et une partie de la bande du roulement.
- la figure 2 représente en coupe le dispositif de l'invention.
- la figure 3 représente une variante du dispositif.

En référence à ces dessins, le dispositif comporte selon une première caractéristique une bande élastique (1) ceinturant la bande de roulement d'un pneumatique sur son pourtour,procurant par un serrage constant une certaine solidarisation du dispositif avec la roue.

Dans l'art antérieur, on peut considérer les documents suivants:
- US 1 568 581 A (Albert Joseph ) 5 janvier 1926 (1926-01-05)
- FR 357 750 A (Brisson H-J-A) 10 janvier 1906 (1906-01-10)
- DE 199 59 381 A1 (Ramsauer Hermann DE ) 21 juin 2000 (2000-06-21)
   Ces documents font état de dispositifs antidérapants pour roues d'automobiles pour améliorer l'adhérence sur routes enneigées

Cependant l'invention diffère de ces dispositifs connus en ce qu'elle comporte une bande élastique ceinturant la bande de roulement d'un pneumatique sur son pourtour, procurant part un serrage constant une certaine solidarisation du dispositif avec la roue, la bande élastique s'insérant entre les deux épaisseurs de sangles non élastiques (3), ces sangles non élastiques étant fixés perpendiculairement à la bande élastique et réparties a intervalles réguliers.

La bande élastique permet également d'adapter un même modèle du dispositif à une large gamme de pneumatiques de dimensions différentes.

L'élasticité du dispositif permet une pose très simplifiée consistant à placer la bande élastique (1) par étirement sur le pourtour du pneumatique sans aucun réglage, il n'y a pas besoin de tendeur.

Les dimensions de la bande élastique ne sont pas définies et peuvent varier en fonction des dimensions de pneumatiques choisis

Afin de garantir un serrage, le dispositif démonté devra être d'un diamètre inférieur à celui du pneumatique d'environ 5 à 10 centimètres.

La largeur de la bande peut aussi varier dans la limite de la largeur du pneu.

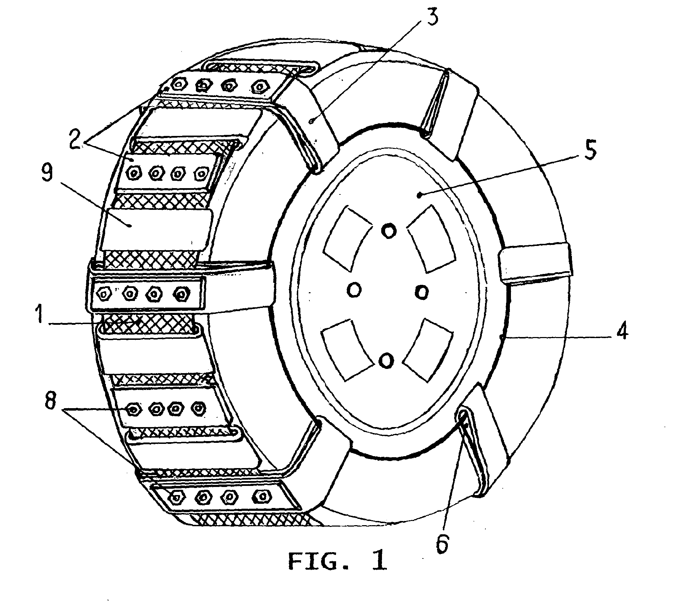

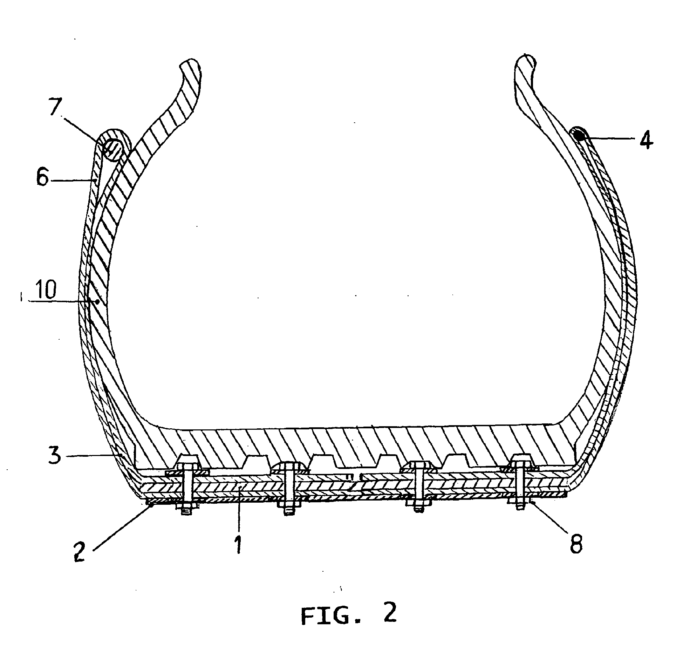

Suivant les figures 1 et 2, des sangles non élastiques en tissu polypropylène (3) sont réparties à intervalles réguliers autour de la bande élastique et lui sont fixées perpendiculairement.

La bande élastique s'insère entre les deux épaisseurs de ces sangles non élastiques (3)

Ces sangles se prolongent de chaque coté de la roue, leurs extrémités formant des boucles (6) étant reliées du côté extérieur de la roue à un élément allongé (4) formant un cercle contre le flanc du pneu (10) empêchant le déplacement du dispositif du côté intérieur de la roue lors de l'utilisation.

Le dit élément allongé (4) peut être souple et non élastique ou selon une variante un élastique de type extenseur.

Du côté intérieur de la roue, les sangles étant reliées de la même façon à un élastique de type extenseur (7) cet élastique formant également un cercle contre le flanc du pneu (10) empêchant le déplacement du dispositif du côté extérieur de la roue lors de l'utilisation, cet élastique permet une facilité de pose du dispositif par extension.

Des crampons vissés (8), fixés sur la ceinture élastique (1) avec les sangles (3) et des plaques perforées intermédiaires (2) procurent un accrochage sur la chaussée enneigée ou verglacée. Ces crampons permettent en même temps la fixation des sangles (3) à la ceinture élastique.

Les plaques perforées intermédiaires (2) servent de renforts pour la fixation des crampons sur la ceinture élastique, empêchant leur arrachement.

Des protections intermédiaires (9) non élastiques et non pourvus de crampons, en polypropylène protègent des parties de la ceinture élastique en les enveloppant.

Les quantités de crampons de sangles et de plaques perforées (2) ne sont pas définis et peuvent varier selon les dimensions de pneumatiques choisis.

Selon une variante non illustrée, les crampons vissés peuvent être remplacés par des rivets moulés faisant fonction de crampons, fixés à la ceinture élastique (1) avec les sangles (3) et les plaques intermédiaires (2).

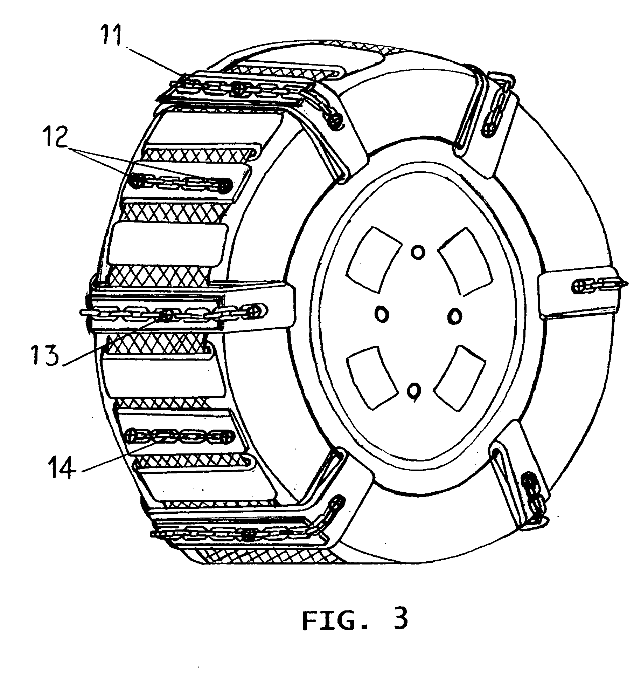

En référence au dessin figure 3, une variante est réalisée avec des tronçons de chaînes rapportés (11) et (14) de type anti-neige, les tronçons courts (14) sont fixés en leurs extrémités par des fixations (12) avec les plaques intermédiaires (2) et la ceinture élastique (1).

Des tronçons plus longs (11) peuvent être prolongés jusqu'aux flancs du pneumatique, fixés par des fixations (12) et (13) avec les sangles (3), les plaques (2) et la bande élastique (1)

Les fixations peuvent être réalisées avec des boulons ou des rivets.

Selon des variantes, les pièces en tissu polypropylène sont remplacées par la fibre de polyester ou toute autre matière au moins aussi résistante.

L'usure du dispositif est limitée car le contact avec la chaussée se fait essentiellement sur les crampons, les autres parties en tissus ne subissent donc pas trop d'efforts ni de frottements et ce, d'autant que les crampons seront nombreux. Les extrémités de la bande élastique sont rejointes par chevauchement sur environ 20 cm et fixés entre elles par couture et par l'intermédiaire d'une partie des crampons. Les bandes en polypropylène sont doublées et les deux épaisseurs sont cousues entre elles, sauf au niveau de l'élément allongé et de l'élastique(7), afin de réaliser les boucles, ainsi qu'au niveau de la bande élastique qui se loge entre les deux épaisseurs. Les extrémités de l'élément allongé (4) sont reliées par sertissage. Les extrémités de l'élastique de type extenseur (7) sont reliées également par sertissage.

La pose du dispositif est très simplifiée, elle consiste à étendre l'élastique de type extenseur en le plaçant derrière la roue contre le flanc intérieur du pneumatique tout en plaçant également la bande élastique à crampons autour de la bande de roulement. La partie de roue en contact avec le sol, empêchant la mise en place du dispositif à cet endroit, il suffit à ce stade d'avancer ou de reculer le véhicule d'environ un mètre afin de positionner complètement le système autour de la roue. Le temps de pose est d'environ une minute à une minute trente par roue.

Il est conseillé de ne jamais rouler à une vitesse supérieure à quarante kilomètres par heure, de conduire sans accélérations ni démarrages ou freinages brusques.

## Revendications

1. Dispositif pour roues de véhicules automobiles, pour améliorer l'adhérence sur routes enneigées ou verglacées **caractérisé en ce qu'**il comporte une bande élastique (1) ceinturant la bande de roulement d'un pneumatique sur son pourtour, procurant par un serrage constant une certaine solidarisation du dispositif avec la roue, la bande élastique s'insérant entre les deux épaisseurs de sangles non élastiques (3), ces sangles étant fixées perpendiculairement à la bande élastique et réparties à intervalles réguliers, ces sangles se prolongent de chaque coté de la roue, leurs extrémités formant une boucle (6), ces boucles étant reliées du côté extérieur de la roue à un élément allongé (4) formant un cercle contre le flanc du pneumatique (10) cet élément allongé empêchant le déplacement du dispositif du côté intérieur de la roue lors de l'utilisation ; du côté intérieur de la roue, les sangles étant reliées de la même façon à un élastique de type extenseur (7) formant également un cercle contre le flanc du pneumatique (10) empêchant le déplacement du dispositif du côté extérieur de la roue lors de l'utilisation.

2. Dispositif selon la revendication 1 **caractérisé en ce qu'**il comprend des plaques perforées intermédiaires (2) servant de renforts pour la fixation des crampons (8) sur la ceinture élastique (1) empêchant leur arrachement.

3. Dispositif selon la revendication 1 ou 2 **caractérisé en ce qu'**il comprend des protections intermédiaires (9) non élastiques et non pourvus de crampons, protégeant des parties de la bande élastique en l'enveloppant.

4. Dispositif selon l'une quelconque des revendications 2 à 3 **caractérisé en ce qu'**il comprend des crampons vissés (8) fixés sur la ceinture élastique (1) par l'intermédiaire des plaques perforées (2) procurant un accrochage sur la chaussée enneigée ou verglacée.

5. Dispositif selon la revendication 1 **caractérisé en ce qu'**il comprend des crampons (8) permettant la fixation des sangles (3) à la ceinture élastique

6. Dispositif selon l'une quelconque des revendications 2 à 3 **caractérisé en ce qu'**il comprend des rivets moulés faisant fonction de crampons, fixés à la ceinture élastique (1) avec les sangles (3) et les plaques perforées intermédiaires (2).

7. Dispositif selon l'une quelconque des revendications 2 à 6 **caractérisé en ce qu'**il comprend des tronçons de chaînes (14) fixés par des fixations (12) avec les plaques perforées (2) et la ceinture élastique(1).

8. Dispositif selon la revendication (7) **caractérisé en ce qu'**il comprend des tronçons de chaînes (11) étant prolongés jusqu'aux flancs du pneumatique, étant fixés par des fixations (12) et (13) avec les plaques (2), les sangles (3) et la bande élastique (1).

9. Dispositif selon l'une quelconque des revendications précédentes **caractérisé en ce que** le dit élément allongé (4) formant un cercle contre le flanc du pneumatique (10) est un câble souple non élastique.

10. Dispositif selon l'une quelconque des revendications 1 à 8 **caractérisé en ce que** le dit élément allongé (4) formant un cercle contre le flanc du pneumatique (10) est un élastique de type extenseur.
